# EUROPEAN PATENT SPECIFICATION

(11) **EP 1 346 643 B1**
(45) Date of publication and mention of the grant of the patent: **03.05.2006**
(21) Application number: 02076098.9
(22) Date of filing: 20.03.2002
(51) Int. Cl.: A23G 1/20, A23G 1/21

(54) **Method of making chocolate shells**
Verfahren zur Herstellung von Schokoladenhülsen
Procédé pour la fabrication de coques de chocolat

(43) Date of publication of application: 24.09.2003
(73) Proprietor: AASTED-MIKROVERK APS, 3520 Farum (DK)
(72) Inventor: Refer, Jacob Christian, 3000 Helsingoer (DK)
(74) Representative: Heiden, Finn

(56) References cited:
- EP-A- 0 589 820
- EP-A- 0 914 776
- EP-A- 0 948 899
- FR-A- 2 764 779

## Description

The present invention concerns the making of shells by immersing plunges into chocolate-like mass in mould cavities.

Generally, chocolate-like masses are suspensions of non-fat particles such as sugar, milk powders and cocoa solids mixed up with a liquid fat constituent. Often the fat phase comprises genuine cocoa butter of until around 30%, but may comprise substitutes as well. Such substitutes can be in the form of other types of fat-containing oils. Chocolate types where the cocoa butter has been replaced wholly or partly by other fats are often named commercially as compound chocolate, in which the cocoa butter has been replaced by palm-kernel oil. Mass made of 100% fat in the form of cocoa butter or the like as compound is also possible.

However, for the chocolate-like masses according to the present invention it is decisive, that whether the fat phase constitutes of genuine cocoa butter or substitutes therefore, that the fat phase is capable of crystallizing into stable crystal types, such as the β-crystals developing in genuine cocoa butter when the mass solidifies.

The chocolate-like mass is brought to a tempered, liquid state and then deposited in the mould cavities. Optionally, the mould plates may then be shaken for obtaining a more even distribution of the chocolate mass.

By the tempering process the mass is brought to around 40-50°C, where after it is being cooled to around 25-34°C so that crystallisation is initiated. Then the mass is reheated around 0,5-2,0°C for re-melting most of the in-stable crystals in the mass, however preserving a content of stable β-crystals which melts at a higher temperature than the in-stable crystals. The stable crystals are preserved in the mass ready for depositing in an amount of typically 0,01% - 5%, preferably in an amount of 0,1 % - 2%. The stable crystals could preferably be of the βV or βIV type.

The method could also be used for making an inner chocolate layer on pre-made articles, for example by depositing tempered chocolate-like mass in an already made shell, optionally shaking the moulds, and then immersing cold plungers into the deposited mass for making shells with predetermined and even thickness. The first pre-made shell could be of one chocolate type such as ordinary milk chocolate and the inner chocolate layer made subsequently could be of an other chocolate type, such as a white chocolate.

After the shells made have solidified fully at a cooling subsequently to the inventive method, they could be filled with a centre mass of a creamy or liquid food material, which differs from that of the shell material. The centre mass could be an alcohol containing mass, a sugar containing mass or a creamy fondant mass, simply any of the centre masses known to the chocolate industry. Finally, a chocolate covering layer may be deposited for closing the centre mass off thereby creating a complete article known as a "praline".

GB-PS 207 974 discloses making of a chocolate shell by immersing a plunger into confectionery mass such as chocolate. For having the plunger to release the mass when retracted from the solidified shell and thereby avoiding that the shell is destroyed, a lubricant is applied to the surface of the plunger before immersing the plunger into the mass. The plunger may be cooled or warmed for obtaining a "jelly" characteristic of the suggested lubricants when applied to the plunger. Though the disclosure was made already in 1923, chocolate making industry did never make use of the suggested technique as it required the application of lubricants.

EP 0589 820 A discloses a/ method of making chocolate shells by immediately immersing a cooling member having a temperature below 0°C in tempered chocolate mass in a mould. However, the disclosure gives no specification as such of the tempering process to be performed and the characteristics of the obtained tempered mass. Prevailing conditions in factories is an air temperature of around 20-25°C and a moisture content of around 50-60%, so when using the disclosed method dew will instantly form on the surface of the cooling member. The dew works as a lubricant when the cooling member is withdrawn. After a while the dew may convert to a thin ice layer on the surface of the cooling member before it is being immersed. The ice layer will melt and lubricate against the chocolate mass.

WO 98/52425 discloses a method by which the dew point of the atmosphere surrounding the edible mass is kept below the temperature of the plunger for avoiding stains on the edible mass pressed by the plunger. However, the disclosure is silent about the conditions of the atmosphere surrounding the plunger itself and if the plunger is pre-lubricated or not. When the plunger is in its uppermost position the edible mass is deposited in the mould and as prevailing conditions in factories has an air temperature of around 20-25°C and a moisture content of around 50-60% dew and ice will rapidly form on the plunger surface, especially when relatively deep plunger temperatures are applied as suggested. So when the plunger immerses into the mass in the mould dew or ice is already formed on the plunger surface working as a secure lubricant when the plunger is withdrawn from the shell made. The disclosure also suggests, that the surface of the plunger coming into contact with the shell is covered or coated, apparently for achieving a lubrication effect. The suggested keeping of the dew point of the atmosphere surrounding the edible mass being kept below the temperature of the plunger then only avoids further creation of dew or ice on the plunger surface when it closes up to the mass. Furthermore, the disclosure is silent about any means or devices, which actually is capable of achieving the desired control of keeping the dew point of the atmosphere around the edible mass below the surface temperature of the plunger. The disclosure is silent about any possible pre-treatment or composition of chocolate mass to be used.

A method for making shells of chocolate mess is also disclosed in EP-A-0 948 899 and EP-A-0 314 776.

By the solution according to the present invention plungers having dry pressing surfaces onto which no lubricant is applied are immersed into contact with liquid or flowable, non-solidified tempered chocolate thereby being pressed into the shape of a shell. The temperature of the pressing surfaces is kept below the solidification temperature of the chocolate mass during the pressing, and the plungers are retracted from the chocolate shells before they are solidified completely. So necessary for the plunger to be capable of being retracted from the chocolate layer without deforming the inside of the shell is at least, that the outer part or surface "skin" of the chocolate layer has solidified and thereby contracted slightly. The pressing surfaces are high gloss surfaces. That only the "skin" has solidified may easily be acknowledged as the inside of the shell is still kind of "leather-like", soft and slightly durable without breaking. If the shell was fully solidified it would become hard and differently non-durable with an essentially instant break.

The chocolate rapidly solidifies under crystallisation from its surface in contact with the pressing surface of the plunger and inwardly through the chocolate layer. By being forced into contact with the colder pressing surface of the plunger, the tempered chocolate instantly solidifies and contracts slightly at its part in contact with the pressing surface whereby it releases the pressing surface. Decisive is here, that the tempered chocolate contains stable crystals, which makes the chocolate mass contract just slightly when it solidifies in contact with a continuously cooled surface.

A solidified outer "skin" is created on the chocolate in contact with the pressing surface when the chocolate solidifies and contracts slightly, and this is sufficient for the chocolate to release from the plunger surface where after the plunger can be retracted. Observed thickness of the "skin" performed against the pressing surfaces is between 0,1 mm and 1 mm, typically between 0,1 and 0,5 mm for a shell thickness of 1-2 mm and typically between 0,5 mm and 1 mm for shell thickness between 2mm and 5 mm.

The pressing surfaces are high gloss surfaces so that diminishing friction is created with the chocolate mass when it contracts slightly during contraction. The remaining or inner part of the chocolate layer then doesn't need to be solidified when the plunger is retracted from its contact with the chocolate. The solidified "skin" of the chocolate layer secures a geometrical stable inside of the shell though heat remains inside the chocolate layer when the plunger is retracted from contact.

By the inventive method, at which the plungers are retracted before the shell has solidified completely, the chill forced from the inside does not reach all the way through the shell layer before the plunger is retracted. Though the outside of the shell in contact with the mould cavity has solidified slightly in the outer "skin" simultaneously with the forced solidification from the inside surface of the shell in contact with the plunger, heat still remains in the inside of the shell layer when the plunger is retracted. The inner of the chocolate layer is more or less "leather-like" when the plunger is retracted. The temperature of the mould cavities are typically kept below the solidification temperature of the chocolate mass and above 10°C.

Thereby is obtained different characteristics for the inside of the ready shell in comparison with the outside thereof. At least the inner layer is still "Leather-like" when the cooling member is lifted clear, so that the desirable state of the tempered chocolate is preserved and the stable crystals are kept by the remaining following slow solidification of the outside. The high quality of the tempered chocolate, i.e. no "fat-bloom", no whitening and no softening with time and consequently god taste is thereby preserved on the outside of the shell. On the inside however, the rapid cooling has secured the immediate contraction and the accompanying "hardening" of the inside of the shell.

The shell made thereby has a superior, strong inner surface barrier against being dissolved by the inner filling mass deposited into the shell subsequently, yet is the quality of the tempered chocolate preserved on the outside of the shell.

When the remaining chocolate mass of the shell solidifies, the remaining heat will be transported up through the inner hard surface layer of the shell now being free from the cooling plunger withdrawn from the shell. The shell still remains in the mould cavity so that the mould plate made by plastic material works as an insulator. During the passage of the solidified inner hard surface layer the remaining heat will convert or re-melt possible undesirable instable crystals, so that only desirable stable crystals remains when the shell is fully solidified.

No "fat-bloom" is then created with time at the inside of the shell due to its content of desirable stable crystals making the above describes embodiment especially advantageous for making shells with a visible inner surface, such as "Easter" or "Kinder" eggs, which are not to be filled with any centre mass.

However, with the above explained embodiment care should be taken so that the chill is limited and so that it is secured, that the rapid cooling from the inside doesn't reach all the way through the shell whatever the thickness thereof may be. The combination of the temperature of the pressing surfaces and the immersion time thereof in contact with the chocolate determines the actual amount of chill taken up by the chocolate mass. Obviously, the immersion time has to be reduced when the shell thickness is smaller when keeping the temperature of the pressing surfaces essentially constant.

The thickness of the chocolate shells manufactured is typically between and 5 mm. It has been observed, that for reaching the above effect of remaining heat inside the shell wall, the immersion time should be less than 1 second for a 1 mm thick shell, less than 2 seconds for a 2 mm thick shell and less than 3 seconds for a 3 mm thick shell, less than 4 seconds for a 4 mm thick shell and less than 5 seconds for a 5 mm thick shell when the temperature of the pressing surfaces was constantly kept around -20°C. When the temperature of the pressing surfaces was kept around -5°C the immersion periods should be less than 1,5 seconds, 3 seconds, 4 seconds, 6 seconds and 8 seconds for the 1 mm, 2mm, 3mm, 4mm and 5mm shell thickness.

Furthermore is obtained, that a predetermined inner geometry of a shell can be obtained without the use of any intermediary lubricant applied to the plunger surface. When being pressed by the surface of the plunger the ready made inner surface of the shell is simply an identical print of the geometry of the plunger surface. Deleterious effects to the chocolate caused by remains of lubricant, whether it be water, gelatine or any other possible receipt is completely avoided. Furthermore is contamination of the plunger and the edible chocolate article with lubricant remains avoided. Remains having a water content is certainly suspected to give rise to bacteria growth such as in the dangerous salmonella form.

When the plunger has been retracted the inside of the chocolate shell is completely dry and free from any remains of lubricant. Whether the shell made is to be eaten with a visible inner surface as an "Easter" egg or the shell is to be filled with a centre mass and closed of remains of lubricant is no matter of pure appearance. Lubricant remains and especially when having the slightest water content it dissolves the chocolate surface and gives rise to "fat-bloom" in the chocolate, bad taste and is the perfect basis for bacteria growth, which makes people sick. There is plenty of accidents in chocolate making history by which contamination of a centre mass in a closed chocolate shell has been the coarse of swelling, so that the filled shell more or less "exploded". Several accidents with salmonella contamination of chocolate is known as well.

When the temperature of the pressing surfaces are kept below 0°C in contact with the chocolate mass during pressing, an especially strong shell wall against leaking out of a subsequently deposited filling is secured. The tempered mass is caught mostly in its "nuclei" form of the desirable crystals directly at the non-lubricated pressing surfaces as the crystals are not given any really time to solidify by growth due to the chill being forced by the non-lubricated and cold pressing surfaces of the plungers into the chocolate. Thereby, the inner surface layer or "skin" of the tempered chocolate shell instantly contracts slightly and becomes hard when it releases the surface of the cooling member. An increase around 25-35% in shell strength of the inner surface has been observed. Such an increase in strength is of great importance when the shell is subsequently filled with a centre mass which off course must not leak out of the chocolate shell before it being eaten.

The invention is explained further below by reference to preferred embodiments as well as the drawing, in which
fig. 1 is a schematical perspective view of the part of a production plant working according to the invention,
fig. 2 is a schematical, partial sectional view of a single chocolate depositing nozzle and a single mould cavity in a moulding plate comprising several cavities,
fig. 3 is a schematically depicted mould plate,
fig. 4 is a schematical, perspective view of a complete plunger section,
fig. 5 is a sectional view of the plunger section,
fig. 6 is a schematical, sectional view of a single plunger to be immersed into the chocolate deposited into a mould cavity,
fig. 7 is the same as in fig. 6, the plunger now being in contact with the chocolate, and
fig. 8 is the same as in figures 6 and 7, the plunger now being pressed into the lowermost position where the shell is completely moulded by the geometry of the pressing surface of the plunger, whereafter the plunger is retracted.

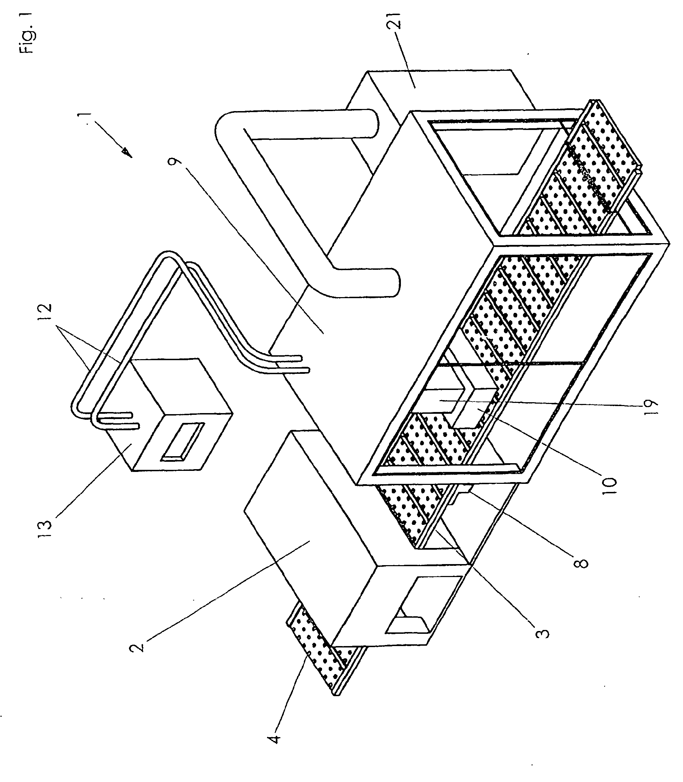

The part of a chocolate article manufacturing plant shown in figure 1 comprises a shell moulding section 1 and chocolate depositing section 2. A continuously moving conveyer 3 extends through the stations 1 and 2 and carries a great number of adjacent mould plates 4. For clarity is only disclosed the part of the conveyor 3 running through the depicted sections 1 and 2. Subsequently to the shell moulding section 1 normally follows a cooling tunnel and a wrapping section. The shells are then made without any fillings or centre mass, so that when they are unwrapped they have a visible inner surface like in an "Easter" or "Surprise" egg. However, if the shells are to be finished as pralines, a section for moulding of a centre mass into the shells and subsequently covering the shell bottoms with a chocolate covering layer on top of the centre mass follows the shell moulding station.

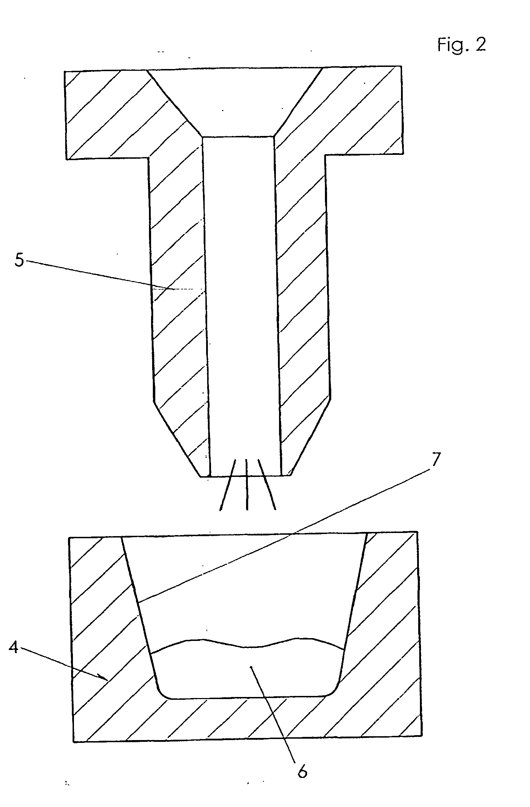

The schematically disclosed housing 2 comprises a depositor of known type with a number of nozzles 5, which as schematically disclosed in figure 2 deposit tempered chocolate 6 in a predetermined volume into the individual mould cavities 7 of each mould plate 4.

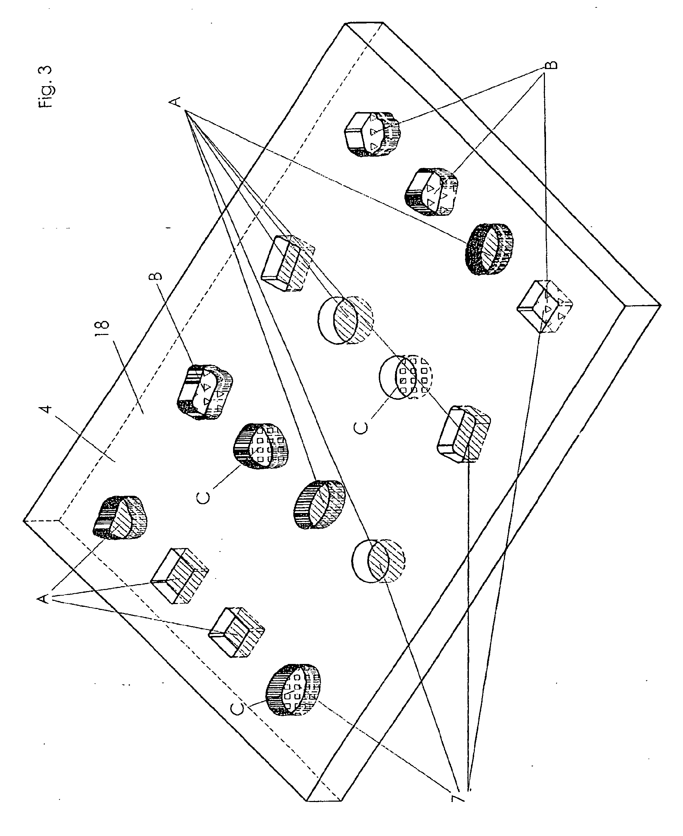

The same type of chocolate may be deposited through all of the nozzles 5 and into the different mould cavities 7 in the same mould plate. However, different types of chocolate may also be deposited optionally through different nozzles 5, so that for example milk chocolate A is deposited into some cavities 7, dark chocolate B is deposited into other cavities and yet a further chocolate type C such as having a yet different taste or colour into other cavities all in moulds of the same mould plate 4 as depicted in figure 3. Any mixture or intermixing of the different chocolate types with each other is thereby avoided by the subsequent pressing of the chocolate layers with the pressing plungers. After the pressing the shells are ready for further treatment or for packaging and any scraping of at the upper surface of the moulds is superfluous.

Each individual mould plate 4 is then carried on by the conveyor 3 and leaves the depositing station 2 and preferably passes over a shaking table 8, which distributes the deposited chocolate 6 more evenly within the individual mould cavities 7 before entering the shell moulding section 1.

The mould plates 4 then enters the shell moulding housing 9, within which the deposited, tempered chocolate is moulded into shells: The temperature of the mould plates 4 and consequently of the mould cavities 7 is preferably kept around 10-20°C during the subsequent pressing of the shells.

The chocolate mass has to undergo a tempering process before it can be deposited.

During the tempering process the chocolate mass is heated to around 40-50°C, whereafter it is being cooled down to around 25-34°C, so that crystallisation is initiated. Then the mass is reheated around 0,5-2,0°C for re-melting most of and preferably all the in-stable crystals in the mass, however preserving a content of stable β-crystals, which melts at a higher temperature than the in-stable crystals. The stable crystals are preserved in the mass ready for depositing in an amount of typically 0,01 % - 5%, preferably in an amount of 0,1 % - 2%.

The tempering process is today well-known and it is known how to regulate the temperatures of the different steps exactly in accordance with the actual chocolate mass being tempered, so that the end result is a mass constituting an amount of stable crystal, typically around 0,1% - 2% and being essentially free from in-stable crystals.

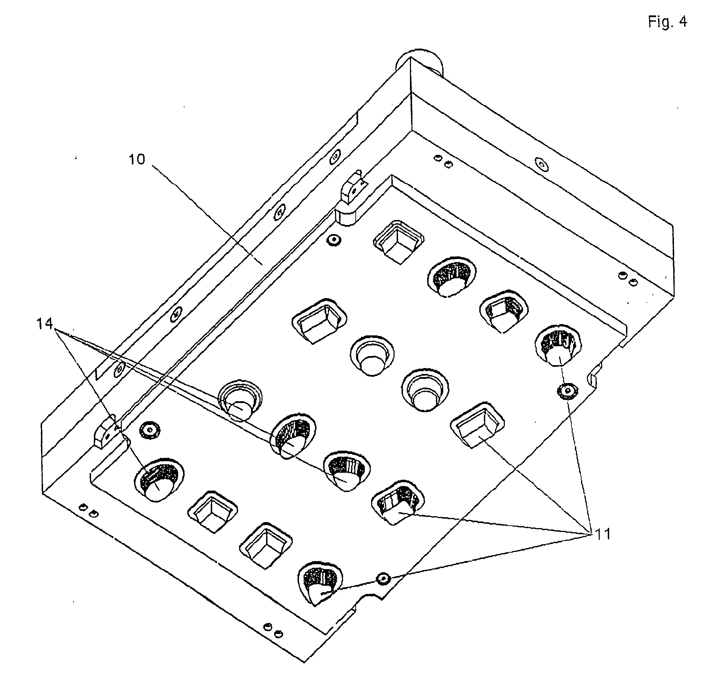

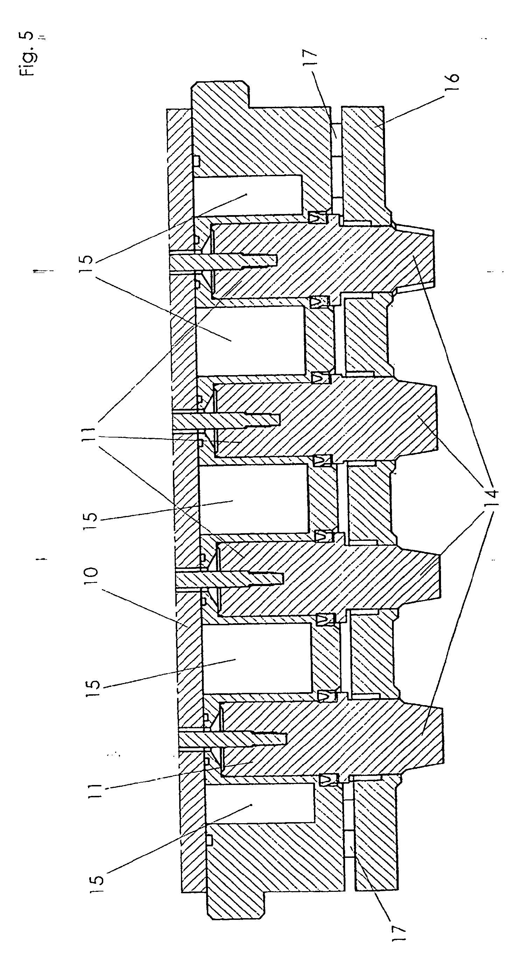

In figure 4 and 5 is schematically disclosed a holding and cooling device 10, in which are arranged plungers 11 in a pattern corresponding to that of the arrangement of the mould cavities 7 in the mould plates 4. As disclosed in figure 1, cooling liquid is circulated via hoses 12 by means of a cooling liquid controlling device 13 through the holding and cooling device 10. The temperature of the cooling liquid is kept constant and thereby the temperature of the pressing surfaces 14 of the plungers 11 as well. The temperature of the pressing surfaces 14 of the plungers 11 are kept below the solidification point of the tempered chocolate during the pressing thereof. The temperature of the cooling liquid is typically around 1-5°C colder than the desired temperature kept of the pressing surfaces 14. However, a temperature difference lower than 1°C between the temperature of the cooling liquid flowing through the cooling channels 15 of the holding plate 10 and the temperature kept at the pressing surfaces 14 is possible to obtain. The flow of the cooling liquid through the cooling channels 15 is simply increased until the temperature difference is as small as desired, for example below 1°C.

The temperature of the pressing surfaces 14 may be measured by a handheld infrared or laser thermometer or by means of any other known device. Temperature measuring sensors may also be incorporated into the plungers 11 close to or having their ends in line with the pressing surfaces 14. The sensors may then be wired to a computer or the like which controls the cooling liquid temperature and flow for obtaining the required temperature of the pressing surfaces 14.

The solidification temperature of the particular chocolate mass being used may de obtained from the chocolate supplier or by a premature test where the tempered chocolate is deposited on a surface having a known temperature. However, a surface temperature below 20°C is to the safe side below the solidification temperature of the today's most used chocolate types, though a pressing surface temperature below 10°C is preferred, and even more preferably below 0°C.

The pressing surfaces of the plungers has obtained high gloss. Hereby means that a "shiny" or "mirror"-like surface appearance is obtained. When the plungers are made of steel such a high gloss "mirror"-like surface is easy to imagine. Typically, the plungers are made of metal such as steel, copper or aluminium, however the material is not limited to metal as long as the high gloss surface can be obtained.

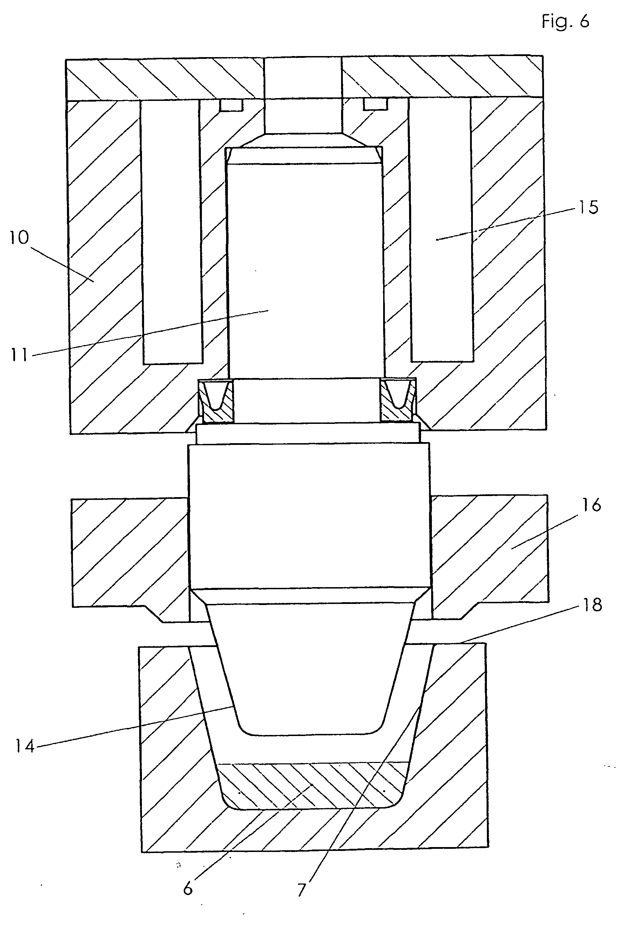

Before the actual pressing of the chocolate is carried out the plunger holding device 10 is positioned in relation to the particular mould plate 4 being in position for pressing in the housing 9. Each of the plungers 14 is thereby brought in line with a corresponding mould cavity 4 as depicted in figure 6 as only one plunger 11 and an underlying mould cavity 7 of the mould plate is shown for clarity. The conveyor 4 may still be moving forward during the pressing operation in which case the holding device is adapted to move forward with the same speed as that of the conveyor during the immersion of the plungers into the chocolate in the particular mould plate. When the holding device has retracted from immersion it traverses to the starting position, so that it again may follow the conveyor when the next pressing operation is to take place in the following mould plate. The other possibility is, that the conveyor is stopped during each pressing operation exactly below a horizontally fixed holding device 10.

The holding device 10 furthermore comprises a closure plate 16, which by the counteraction of a pressure force exerted by for example schematically disclosed springs 17 is movable in relation to the plungers 11, and which is adapted to engage with the upper surface 18 of the mould plates 4 at least in areas surrounding the individual mould cavities 7.

The individual plungers 11 may all be fixed in the holding device 10, so that they are not movable in relation thereto. However, when the individual plungers 11 are independently suspended to the holding device 10 they are able to move to different depths in the different mould cavities, so that compensation for deviations in the depths of the individual moulding cavities 7 and compensation for deviations in the deposited amount of chocolate from cavity to cavity is obtained. The plungers simply acts against a counter pressure, so that when the particular plunger is immersed into the particular deposited amount of chocolate in the mould cavity with the particular depth and volume, the plunger simply levels to a position where the closed of moulding chamber is filled totally with chocolate whatever the actual volume and thickness of the shell may then be.

The up and down movement of the holding device 10 is controlled by means of known simple mechanical means of columns and travelling tool holders or sledges schematically disclosed by 19 in figure 1.

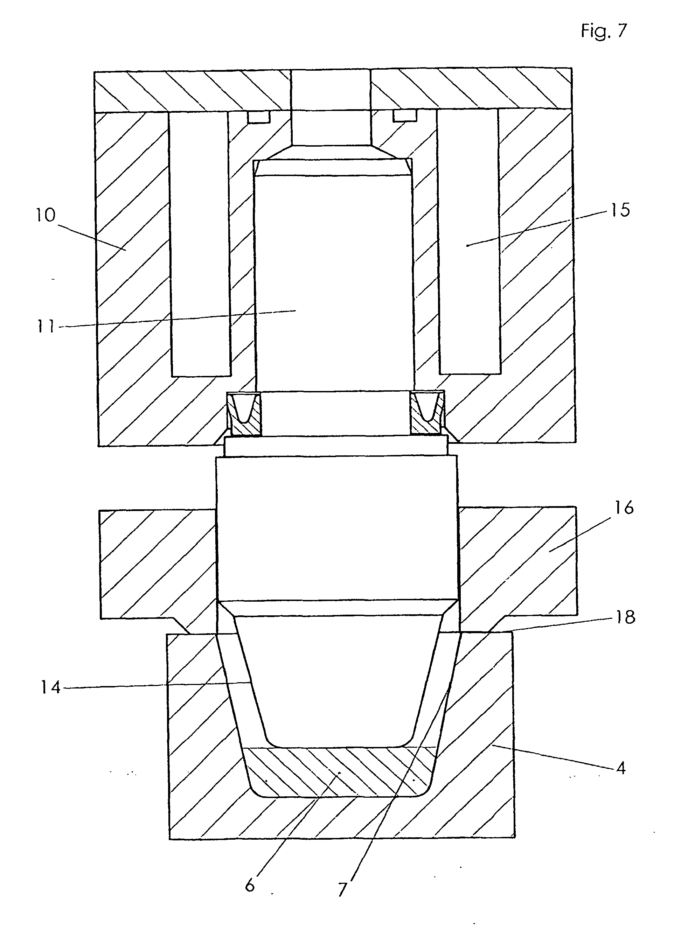

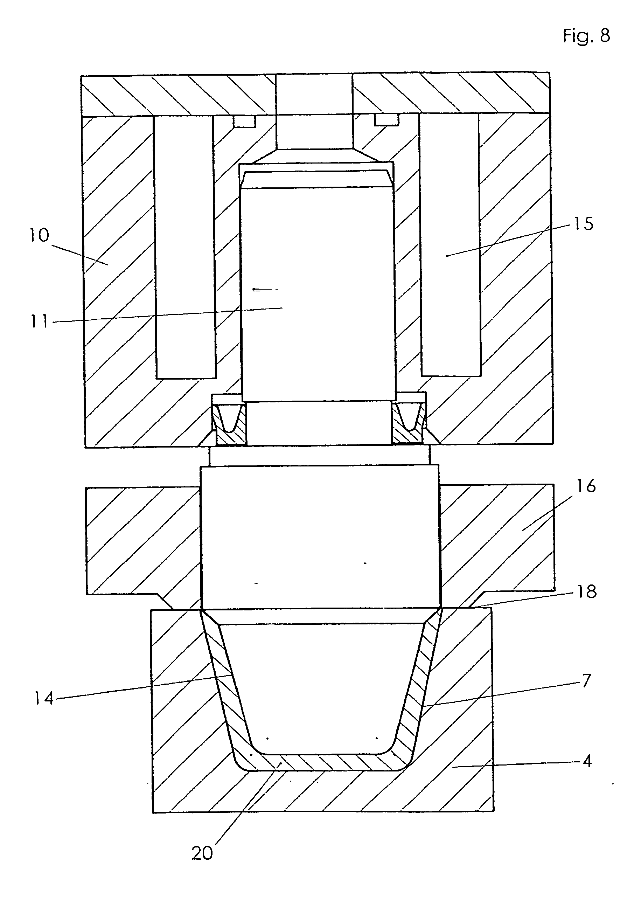

Figure 6-8 schematically discloses the pressing operation by a section through only one plunger 11 and the positioned underlying mould cavity 7. In figure 6 the pressing surface 14 is close to contact with the mass 6 and the closure plate 16 is close to engagement with the upper surface 18 of the mould plate 4. In figure 7 the closure plate 16 has now come to rest on the upper surface 18 of the mould plate 4 whereby the mould cavity 7 is completely closed off and defined. The plunger has started to immerse into the tempered chocolate mass 6.

Essential is, that no lubricant is applied to the pressing surfaces 14 of the plungers 11 before they are immersed into contact with the tempered chocolate mass and that the surfaces are dry. Before the pressing operation is started, all the pressing surfaces 14 of the plungers 11 are thoroughly cleaned off, for example by use of towels with spirit so that one is fully sure, that any possible remains of film of fat, dew, grease or the like which could maybe act as a lubricant is for sure removed.

In figure-8-the holding device 10 has been moved down to its lowermost position in which the tempered, flowable chocolate mass has now completely filled the closed off cavity and is fully pressed into shape as a shell 20 by the contact with the pressing surfaces 14 and the mould cavity 7.

The tempered chocolate mass then rapidly solidifies under crystallisation at the contact with the completely dry pressing surfaces 14 free of any lubricant and being kept at temperatures below that of the solidification temperature of the particular chocolate mass. The chocolate solidifies and contracts slightly in the extension of its thin surface layer or "skin" in contact with the pressing surfaces 14, whereby it instantly releases from adhesion with the pressing surface 14 as the plungers are retracted before the chocolate shell has solidified completely.

Decisive is here, that the tempered chocolate contains stable crystals, which makes the chocolate mass contract just slightly when it solidifies in contact with a non-lubricated, continuously cooled surface. A solidified "skin" is created on the tempered chocolate in contact with the pressing surface 14 when the chocolate solidifies and contracts slightly, and this is sufficient for the tempered chocolate to release from the non-lubricated plunger surface. The remaining part of the chocolate layer then doesn't need to be solidified yet when the plunger is retracted from its contact with the chocolate. The solidified "skin" of the chocolate layer secures a geometrical stable inner surface of the shell though heat remains inside the shell wall when the plunger is retracted from contact already when the solidified "skin" is made.

The contraction is caused by the solidification of the mass into stable crystals and could be as small as 0,1%-0,5% in volume for a typical milk chocolate and up until around 2% for a typical dark chocolate which is known to set harder than a milk chocolate. However, such slight contraction in volume is sufficient to secure, that the solidified chocolate in contact with the non-lubricated pressing surface "springs off' the pressing surface with no further adhesion thereto. As the pressing surface is free of any lubricant or moisture there is no risk that a "suction" or "gluing" effect between the solidifying chocolate surface and the pressing surface is created. Any contamination of the chocolate with remains of lubricant or moisture is avoided as well.

The solidification temperature of the particular tempered chocolate mass varies and is dependent of the chocolate type and recipe, is however typically between 20°C and 30°C for the majority of today's used chocolate types. When keeping the temperature of the pressing surfaces at 20°C the contact period between the chocolate and the pressing surface is around 10 seconds before chocolate "skin" in contact with the pressing surface has solidified and the plunger is retracted.

A clear relation between pressing period and temperature of the pressing surface is present. The lower the temperature the shorter the pressing period obtained. When keeping a temperature of +10°C of the pressing surface the pressing period was shortened to around 5 seconds, and when lowering the pressing surface temperature to between -5°C and +5°C the pressing period was shortened to between 1 and 3 seconds. When the pressing temperature was kept as low as between -25°C and -5°C the pressing period could be as low as 0,5 - 2 seconds. The observations was performed with shell thickness between 1 and 5 mm. Different chocolate types were used, such as traditional milk chocolate, dark chocolate and a white chocolate type.

By one test cooling liquid having a temperature between of around -28°C is circulating through the cooling channels 15 of the holding device 10 with a continuous and forceful flow and the temperature of the plunger pressing surfaces 14 was kept at -20°C. The temperature of the mould cavities 7 was kept between 10°C and 15°C. Shells having thickness between 1,5 mm and 5 mm were made and the immersion period of the plungers when in contact with the chocolate mass was by different trials kept as low as 0,5 seconds for the 1mm and 2 mm thick shells and around 1-2 seconds for the 3-5 mm thick shells. It was observed, that the inside of the shells were still "leather-like" and soft.

The same tests were made now with a cooling liquid temperature of -10°C and a pressing surface temperature of -9°C, and with a cooling liquid temperature of -5°C and a pressing surface temperature of -4°C.

It was observed, that by all these tests the tempered mass is caught mostly in its "nuclei" form of the stable crystals due to the chill being forced by the non-lubricated pressing surfaces into the chocolate. However, the chill didn't reach all the way through the shell wall which were more or less "leather-like" and soft as heat still remained inside the shell wall when the plungers were retracted.

Thereby was observed different characteristics for the inside of the ready shell in comparison with the outside thereof. At least the inner layer is still "Leather-like" when the cooling member is lifted clear, so that the desirable state of the tempered chocolate is preserved and the stable crystals are kept by the remaining following slow solidification of the outside against the mould cavity. The high quality of the tempered chocolate, i.e. no "fat-bloom", no whitening and no softening with time and consequently god taste is thereby preserved on the outside of the shell. On the inside however, the rapid cooling has secured the immediate contraction and a accompanying "hardening" of the inside of the shell.

The shell made thereby has a superior, strong inner surface barrier against being dissolved by the inner filling mass deposited into the shell subsequently, yet is the quality of the tempered chocolate preserved on the outside of the shell.

When the remaining chocolate mass of the shell solidifies, the remaining heat will be transported up through the inner hard surface layer of the shell now being free from the cooling plunger withdrawn from the shell. The shell still remains in the mould cavity so that the mould plate made by plastic material works as an insulator. During the passage of the solidified inner hard surface layer the remaining heat will convert or re-melt possible undesirable instable crystals, so that only desirable stable crystals remains when the shell is fully solidified.

During subsequent shelving no "fat-bloom" was then created at the inside of the shells due to the content of desirable stable crystals making the above describes embodiment especially advantageous for making shells with a visible inner surface, such as "Easter" or "Kinder" eggs, which are not to be filled with any centre mass.

A general increase around 25-35% in shell strength was observed when keeping the pressing surface temperature below 0°C in comparison shells of the same chocolate made by a traditional shell making where no plunger is immersed. Such an increase in strength is of great importance when the shell is subsequently filled with a centre mass which of course must not leak out of the chocolate shell before it being eaten.

During continuous production the air drying device 21 keeps the environment in the housing 9 dry, so that the non-lubricated pressing surfaces 14 are kept free from any development of moisture.

The skilled person controls the unit 21 so that the air is sufficiently dried regardless of the composition of the air and the pressing surface temperature - so that no moisture is created on the pressing surface in any position of the plunger.

It has become possible to produce a chocolate shell having the same high gloss and nice geometry at the inside as on the outside. The pressing surfaces may comprise a company logo or a product brand which is printed into the chocolate.

When the consumer then opens the wrapping of a chocolate shell such as an "Easter" or "Surprise" egg, visible to the consumer is the nice inside totally free from any lubricant remains and having the identical print of the pressing surface with a company name or brand. A major gain to the chocolate manufacturer.

## Claims

1. Method for making shells of chocolate mass with stable crystals, **characterised in that** plungers (11) having dry pressing surfaces (14) are immersed into contact with tempered chocolate mass in corresponding mould cavities (7), the chocolate thereby being pressed into shape (20), and that the temperature of the pressing surfaces (14) are kept below the solidification temperature of the tempered chocolate mass during the pressing, that no lubricant is applied to the pressing surfaces (11), and that the plungers (11) are retracted before the shells have solidified completely when only the "skin" of chocolate contacting the pressing surfaces has solidified, whereby the skin has a thickness of between 0.1 mm and 1 mm.

2. Method according to claim 1, **characterised in, that** the plungers (11) are retracted when the pressing surfaces (11) have contacted the chocolate between 0,5 seconds and 5 seconds.

3. Method according to claim 1, **characterised in, that** the temperature of the mould cavities (7) are kept below the solidification temperature of the chocolate mass (6) and above 10°C.

4. Method according to claim 1, **characterised in, that** the air surrounding at least the pressing surfaces (14) are kept dry in every position of the plungers (11).

## Patentansprüche

1. Verfahren zur Herstellung von Hülsen aus Schokoladenmasse mit stabilen Kristallen, **dadurch gekennzeichnet, dass** Presskolben (11) mit trockenen Pressflächen (14) in die entsprechenden formgebenden Aushöhlungen (7) getaucht werden, um in Kontakt mit der temperierten Schokolade zu gelangen, wodurch die Schokolade zu einer Form (20) gepresst wird, und dass die Temperatur der Pressflächen (14) unter der Erstarrungstemperatur der temperierten Schokoladenmasse während des Pressens gehalten wird, dass kein Schmiermittel auf die Pressflächen aufgebracht ist, und dass die Presskolben (11) zurückgezogen werden, bevor die Hülsen vollständig erstarrt sind, wenn lediglich die "Haut" der Schokolade, die mit den Pressflächen in Kontakt steht, erstarrt ist, wobei die Haut eine Dicke zwischen 0,1 mm und 1 mm aufweist..

2. Verfahren gemäß Anspruch 1, **dadurch gekennzeichnet, dass** die Presskolben zurückgezogen werden, wenn die Pressflächen (11) die Schokolade zwischen 0,5 Sekunden und 5 Sekunden kontaktiert haben.

3. Verfahren gemäß Anspruch 1, **dadurch gekennzeichnet, dass** die Temperatur der formgebenden Aushöhlungen (7) unter der Erstarrungstemperatur der Schokoladenmasse (6) und über 10°C gehalten wird.

4. Verfahren gemäß Anspruch 1, **dadurch gekennzeichnet, dass** die wenigstens die Pressflächen (14) umgebende Luft in jeder Stellung der Presskolben (11) trocken gehalten wird.

## Revendications

1. Procédé pour la production de coquilles en masse de chocolat avec des cristaux stables, **caractérisé en ce que** des plongeurs (11) ayant des surfaces (14) de pression sèches sont submergés en contact avec de la masse de chocolat tempérée dans des cavités (7) de moule correspondantes, le chocolat étant ainsi pressé en forme (20), et **en ce que** la température des surfaces (14) de pression est maintenue au-dessous de la température de solidification de la masse de chocolat tempérée pendant la pression, et **en ce qu'**aucun lubrifiant n'est appliqué sur les surfaces (14) de pression, et **en ce que** les plongeurs (11) sont retirés avant que les coquilles aient solidifié complètement quand seulement la peau du chocolat touchant les surfaces de pression a solidifié par lequel la peau a une épaisseur d'entre 0,1 mm et 1 mm.

2. Procédé selon la revendication 1, **caractérisé en ce que** les plongeurs (11) sont retirés quand les surfaces de pression (14) ont touché le chocolat entre 0,5 secondes et 5 secondes.

3. Procédé selon la revendication 1, **caractérisé en ce que** la température des cavités (7) de moule est maintenue au-dessous de la température de solidification de la masse (6) de chocolat et au-dessus de 10°C.

4. Procédé selon la revendication 1, **caractérisé en ce que** l'air entourant au moins les surfaces (14) de pression est maintenu sec en chaque position des plongeurs (11).
